# EUROPÄISCHE PATENTANMELDUNG

(11) **EP 1 071 301 A2**
(43) Veröffentlichungstag der Anmeldung: **24.01.2001**
(21) Anmeldenummer: 00250250.8
(22) Anmeldetag: 21.07.2000
(51) Int. Cl.: H04Q 7/38

(54) **Verfahren zur Handhabung von Mobilfunk-Diensten**

(30) Priorität: 21.07.1999 DE 19934908
(71) Anmelder: SIEMENS AKTIENGESELLSCHAFT, 80333 München (DE)
(72) Erfinder: Moneke, Klaus, 14089 Berlin (DE); Föll, Uwe, 14612 Falkensee (DE)

(57) **Zusammenfassung**

Die Erfindung bezieht sich auf ein Verfahren zur Handhabung mehrerer Dienstprofile in einem Mobilfunknetz, insbesondere mehrerer abonnierter Dienstprofile, wobei die mehreren Dienstprofile jeweils wenigstens einen mit Hilfe eines mobilen Endgeräts nutzbaren Mobilfunk-Dienst umfassen, wobei in einem Heimatstandort-Register wenigstens eines der mehreren Dienstprofile dem Benutzer zugeordnet ist, und wobei das wenigstens eine Dienstprofil von einem Benutzer mittels des mobilen Endgeräts nutzbar ist, wenn das wenigstens eine Dienstprofil in dem Heimatstandort-Register für den Benutzer aktiviert ist. Bei dem Verfahren wird eines der mehreren Dienstprofile durch den Benutzer ausgewählt. Diese Information wird von dem mobilen Endgerät an das Heimatstandort-Register übertragen, in welchem das von dem Benutzer ausgewählte Dienstprofil aktiviert wird.

## Beschreibung

Die Erfindung betrifft ein Verfahren zur Handhabung mehrerer Dienstprofile in einem Mobilfunknetz, insbesondere mehrerer abonnierter Dienstprofile, wobei die mehreren Dienstprofile jeweils wenigstens einen mit Hilfe eines mobilen Endgeräts nutzbaren Mobilfunk-Dienst umfassen, wobei in einem Heimatstandort-Register wenigstens eines der mehreren Dienstprofile dem Benutzer zugeordnet ist, und wobei das wenigstens eine Dienstprofil von einem Benutzer mittels des mobilen Endgeräts nutzbar ist, wenn das wenigstens eine Dienstprofil in dem Heimatstandort-Register für den Benutzer aktiviert ist.

Die Betreiber von Mobilfunknetzen bieten den Benutzern von mobilen Endgeräten verschiedene Mobilfunk-Dienste an. Hierbei wird grundsätzlich zwischen Mobilfunk-Diensten unterschieden, die beim Senden oder beim Empfangen oder beim Senden und beim Empfangen eines Rufs in dem Mobilfunknetz genutzt werden können. Voraussetzung für die Nutzung eines Mobilfunk-Dienstes durch einen Teilnehmer am Mobilfunknetz ist, daß der entsprechende Mobilfunk-Dienst einerseits dem Teilnehmer zugeordnet ist und andererseits für diesen Teilnehmer aktiviert ist. Die einem Teilnehmer zugeordneten Mobilfunk-Dienste werden in einem Heimatstandort-Register gespeichert. Um einen bestimmten Mobilfunk-Dienst für den Teilnehmer nutzbar zu machen, muß dieser bestimmte Mobilfunk-Dienst in dem Heimatstandort-Register für den Teilnehmer aktiviert sein.

In der Regel sind für einen Teilnehmer mehrere Mobilfunk-Dienste aktiviert. Diese mehreren Mobilfunk-Dienste bilden ein dem Teilnehmer zugeordnetes und für den Teilnehmer aktiviertes Dienstprofil.

Von einem Teilnehmer am Mobilfunknetz ist stets nur ein Dienstprofil beim Senden und ein Dienstprofil beim Empfangen nutzbar. Beim Starten des mobilen Endgeräts zum Senden oder Empfangen eines Rufs wird das eine Dienstprofil automatisch zur Verfügung gestellt, wobei das eine Dienstprofil von nur einem einzelnen Mobilfunk-Dienst, beispielsweise einem einzelnen intelligenten Netzdienst (IN-Dienst) gebildet sein kann.

Um beim Start des mobilen Endgeräts ein Dienstprofil nutzen zu können, das sich von dem zur Zeit genutzten Dienstprofil unterscheidet, muß sich der Teilnehmer mit einem Operator des Betreibers des Mobilfunknetzes in Verbindung setzen, so daß der Operator eine Änderung des aktiven Dienstprofils bewirkt. Der Operator veranlaßt die Änderung des aktiven Dienstprofils des Teilnehmers sowohl in dem Heimatstandort-Register als auch in Besuchsstandort-Registern, die mit dem Heimatstandort-Register verbunden sind. Die Besuchsstandort-Register verwalten jeweils Bereiche in dem gesamten von dem Betreiber des Mobilfunknetzes überdeckten Bereich.

Aufgabe der vorliegenden Erfindung ist es, ein Verfahren der eingangs beschriebenen Art zu schaffen, bei dem ein Dienstprofil benutzerfreundlich und mit geringem Zeitaufwand aus mehreren Dienstprofilen ausgewählt werden kann.

Diese Aufgabe wird erfindungsgemäß durch ein Verfahren nach dem Anspruch 1 gelöst.

Der Vorteil, welcher mit der Erfindung gegenüber dem Stand der Technik erreicht ist, besteht darin, daß eine Möglichkeit geschaffen ist, daß der Benutzer eines mobilen Endgeräts selbst die Auswahl des von ihm gewünschten Dienstprofils treffen kann. Der Benutzer kann ohne Zwischenschaltung eines Operators des Mobilfunknetzbetreibers das für ihn zu einem bestimmten Zeitpunkt günstigste Dienstprofil auswählen, das Dienste umfaßt, die der Benutzer zu dem bestimmten Zeitpunkt bevorzugt nutzen möchte. Stehen dem Benutzer in verschiedenen Dienstprofilen beispielsweise verschiedene Dienste zur Verfügung, bei denen die Kosten für ein Telefonat von dem Standort des Benutzers abhängen, kann der Benutzer jederzeit in Abhängigkeit von dem Standort das Dienstprofil mit den für ihn günstigsten Diensten auswählen, ohne daß die Notwendigkeit besteht, vorher mit dein Mobilfunknetzbetreiber bzw. mit dessen Operator telefonisch in Kontakt zu treten. Hierdurch sparen der Benutzer und der Operator Zeit und Geld.

Eine vorteilhafte Ausgestaltung der Erfindung sieht vor, daß über ein ausgewähltes Dienstprofil hinaus ein weiteres Dienstprofil in gleicher Weise ausgewählt wird, und daß das weitere ausgewählte Dienstprofil aktiviert wird, wodurch wenigstens zwei Dienstprofile für einen Benutzer aktiviert werden können.

Bei einer Weiterbildung der Erfindung wird das ausgewählte Dienstprofil beim Senden und das weitere ausgewählte Dienstprofil beim Empfangen mittels des mobilen Endgeräts genutzt, wodurch sowohl Dienstprofile für das Senden als auch Dienstprofile für das Empfangen eines Rufs mit dem mobilen Endgerät ausgewählt werden können. Es ist gleichfalls möglich, daß eines der ausgewählten Dienste sowohl beim Senden als auch beim Empfangen genutzt wird.

Bei einer Fortbildung der Erfindung kann vorgesehen sein, daß vor dem Aktivieren des ausgewählten und/oder des weiteren ausgewählten Dienstprofils überprüft wird, ob der Benutzer berechtigt ist, zwischen den mehreren Dienstprofilen auszuwählen. Hierdurch wird verhindert, daß ein nichtberechtigter Benutzer zwischen den mehreren Dienstprofilen auswählt.

Zweckmäßig wird vor dem Aktivieren des ausgewählten und/oder des weiteren ausgewählten Dienstprofils überprüft, ob das ausgewählte und/oder das weitere ausgewählte Dienstprofil dem Benutzer zugeordnet ist, wodurch gewährleistet ist, daß ein Benutzer nur zwischen ihm zugeordneten Dienstprofilen auswählen kann, und ausschließlich die Aktivierung solcher zugeordneter Dienstprofile initiieren kann.

Bei einer vorteilhaften Ausgestaltung der Erfindung ist vorgesehen, daß eine Information über die Aktivierung des ausgewählten Dienstprofils und/oder des weiteren ausgewählten Dienstprofils von dem Heimatstandort-Register an ein Besuchsstandort-Register übermittelt wird, so daß das ausgewählte Dienstprofil und/oder das weitere ausgewählte Dienstprofil von dem Benutzer mittels des mobilen Endgeräts in einem Bereich genutzt werden können, der durch das Besuchsstandort-Register verwaltet wird. Hierdurch wird die Einheitlichkeit für den Gesamtbereich des Mobilfunknetzes hinsichtlich der einem Benutzer in dem Mobilfunknetz zur Verfügung stehenden, aktivierten Dienstprofile gewährleistet.

Eine zweckmäßige Weiterbildung der Erfindung sieht vor, daß das ausgewählte Dienstprofil und/oder das weitere ausgewählte Dienstprofil für den Benutzer in dem Heimatstandort-Register dadurch aktiviert werden, daß ein Benutzer-Datensatz in dem Heimatstandort-Register verändert wird, wodurch eine mit geringem Aufwand ausführbare und zuverlässige Möglichkeit zur Aktivierung und Deaktivierung von ausgewählten Dienstprofilen für den Benutzer geschaffen ist.

Eine zweckmäßige Fortbildung der Erfindung sieht vor, daß zum Übertragen der Information, welches und/oder welches weitere der mehreren Dienstprofile ausgewählt wurden, von dem mobilen Endgerät an das Heimatstandort-Register eine aus einem Mobilfunkstandard bekannte Servicedaten-Funktion genutzt wird, wobei die Information als ein String übertragen wird, vorzugsweise als ein USSD-String ( 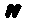 Unstructured Sublementary Service Data"-String). Hierdurch kann die Erfindung mit Hilfe bekannter Funktionen implementiert werden. Die USSD-Funktion steht standardmäßig für die Kommunikation in Mobilfunknetzen zur Verfügung.

Die Erfindung wird im folgenden anhand eines Ausführungsbeispiels näher erläutert.

Ein Benutzer eines Mobilfunknetzes hat mehrere von einem Betreiber des Mobilfunknetzes angebotene Mobilfunk-Dienste abonniert. Die abonnierten Mobilfunk-Dienste bilden ein oder mehrere Dienstprofile, die jeweils einen oder mehrere Mobilfunk-Dienste umfassen. Hierbei handelt es sich um Mobilfunk-Dienste, die beim Senden, beim Empfangen oder beim Senden und beim Empfangen eines Rufs in dem Mobilfunknetz genutzt werden können. Beispielsweise kann der Benutzer besondere Tarife für Telefonate mit einer bestimmten Anzahl von Personen mit dem Betreiber des Mobilfunknetzes vereinbaren. Weiterhin kann der Benutzer spezielle Ortstarife abonnieren, wobei der Preis, den der Benutzer pro telefonierter Zeiteinheit zu zahlen hat, von dem Standort abhängt, in dem ein Ruf empfangen oder gesendet wird. Ein weiterer bekannter Mobilfunk-Dienst beinhaltet, daß der Benutzer im Voraus einen bestimmten Betrag an den Betreiber des Mobilfunknetzes zahlt, den er anschließend beim Telefonieren in dem Mobilfunknetz verbraucht.

Beim Start eines mobilen Endgeräts des Benutzers wird zunächst eines der Dienstprofile automatisch zur Verfügung gestellt. Es handelt sich hierbei um das Dienstprofil, welches in einem Heimatstandort-Register gegenwärtig für den Benutzer aktiviert ist. Üblicherweise ist für den Benutzer zu einem Zeitpunkt nur ein Dienstprofil für das Senden und ein Dienstprofil für das Empfangen aktiviert.

Um die Einheitlichkeit im gesamten Mobilfunknetz zu gewährleisten, verfügen auch Besuchsstandort-Register, die einzelne Bereiche des gesamten Mobilfunknetzes verwalten, über die entsprechende Information hinsichtlich des gegenwärtig aktivierten Dienstprofils.

Der Benutzer des mobilen Endgeräts kann nun die Mobilfunk-Dienste aus dem automatisch zur Verfügung gestellten Dienstprofil nutzen oder mit Hilfe einer Auswahleinrichtung ein anderes Dienstprofil auswählen. Um ein anderes Dienstprofil auszuwählen, gibt der Benutzer mit Hilfe vorhandener Tasten des mobilen Endgeräts, die sowohl mit Zahlen als auch mit Buchstaben belegt sind, einen String ein. Hierbei handelt es sich vorzugsweise um einen USSD-String ( 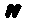 Unstructured Sublementary Service Data"-String). Das hat den Vorteil, das eine im Rahmen der Kommunikation in Mobilfunknetzen standardmäßig zu Verfügung stehende USSD-Funktion genutzt werden kann. Der eingegebene String kann auf einer vorhandenen Anzeigeeinrichtung des mobilen Endgeräts dargestellt werden.

Der eingegebene String, welcher die Information über das ausgewählte Dienstprofil enthält, wird anschließend an das Heimatstandort-Register übermittelt, um dort das ausgewählte Dienstprofil für den Benutzer zu aktivieren. Zu diesem Zweck weist ein Benutzerdatensatz in dem Heimatstandort-Register einen Eintrag auf, der auf das aktivierte Dienstprofil hinweist. Dieser Eintrag wird der Auswahl des Benutzers entsprechend verändert, um das ausgewählte Dienstprofil zu aktivieren. Zur Änderung des Benutzerdatensatzes wird eine Servicedaten-Funktion aus einem bekannten Standard zur Kommunikation in Mobilfunktnetzen, insbesondere GSM genutzt.

Um zu gewährleisten, daß das ausgewählte Dienstprofil dem Benutzer anschließend im gesamten Mobilfunktnetz zur Verfügung steht, wird die Information über das ausgewählte Dienstprofil an die Besuchsstandort-Register übertragen.

Um einen Mißbrauch der Möglichkeit zur Auswahl des aktiven Dienstprofils durch nichtberechtigte Benutzer zu verhindern, wird vor der Aktivierung des ausgewählten Dienstprofils in dem Heimatstandort-Register überprüft, ob der Benutzer dazu berechtigt ist, eine Auswahl zwischen den ihm zugeordneten Dienstprofilen zu treffen. Wenn dies der Fall ist, wird weiterhin überprüft, ob das ausgewählte Dienstprofil von den dem Benutzer zugeordneten Dienstprofilen umfaßt ist. Hierdurch ist verhindert, daß der Benutzer ein von ihm nicht abonniertes, und ihm deshalb nicht zugeordnetes Dienstprofil nutzt.

## Patentansprüche

1. Verfahren zur Handhabung mehrerer Dienstprofile in einem Mobilfunknetz, insbesondere mehrerer abonnierter Dienstprofile, wobei die mehreren Dienstprofile jeweils wenigstens einen mit Hilfe eines mobilen Endgeräts nutzbaren Mobilfunk-Dienst umfassen, wobei in einem Heimatstandort-Register wenigstens eines der mehreren Dienstprofile dem Benutzer zugeordnet ist, und wobei das wenigstens eine Dienstprofil von einem Benutzer mittels des mobilen Endgeräts nutzbar ist, wenn das wenigstens eine Dienstprofil in dem Heimatstandort-Register für den Benutzer aktiviert ist, wobei das Verfahren die folgenden Schritte aufweist:
a) Ausbilden einer Verbindung zum Informationsaustausch zwischen dem mobilen Endgerät und dem Heimatstandort-Register,
b) Auswählen eines der mehreren Dienstprofile durch den Benutzer mit Hilfe einer Auswahleinrichtung des mobilen Endgeräts,
c) Übertragen der Information, welches der mehreren Dienstprofile ausgewählt wurde, von dem mobilen Endgerät an das Heimatstandort-Register über die ausgebildete Verbindung, und
d) Aktivieren des ausgewählten Dienstprofils für den Benutzer in dem Heimatstandort-Register, so daß das ausgewählte Dienstprofil von dem Benutzer anschließend mittels des mobilen Endgeräts genutzt werden kann.

2. Verfahren nach Anspruch 1, **dadurch gekennzeichnet**, daß die Verfahrensschritte a) bis d) ausgeführt werden, um ein weiteres Dienstprofil aus den mehreren Dienstprofilen auszuwählen, und um das weitere ausgewählte Dienstprofil zu aktivieren.

3. Verfahren nach Anspruch 1 oder 2, **dadurch gekennzeichnet**, daß das ausgewählte Dienstprofil beim Senden und das weitere ausgewählte Dienstprofil beim Empfangen mittels des mobilen Endgeräts genutzt werden.

4. Verfahren nach einem der vorhergehenden Ansprüche, **dadurch gekennzeichnet**, daß vor dem Aktivieren des ausgewählten und/oder des weiteren ausgewählten Dienstprofils überprüft wird, ob der Benutzer berechtigt ist, zwischen den mehreren Dienstprofilen auszuwählen.

5. Verfahren nach einem der vorhergehenden Ansprüche, **dadurch gekennzeichnet**, daß vor dem Aktivieren des ausgewählten und/oder des weiteren ausgewählten Dienstprofils überprüft wird, ob das ausgewählte und/oder das weitere ausgewählte Dienstprofil dem Benutzer zugeordnet ist.

6. Verfahren nach einem der vorhergehenden Ansprüche, **dadurch gekennzeichnet**, daß eine Information über die Aktivierung des ausgewählten Dienstprofils und/oder des weiteren ausgewählten Dienstprofils von dem Heimatstandort-Register an ein Besuchsstandort-Register übermittelt wird, so daß das ausgewählte Dienstprofil und/oder das weitere ausgewählte Dienstprofil von dem Benutzer mittels des mobilen Endgeräts in einem Bereich genutzt werden können, der durch das Besuchsstandort-Register verwaltet wird.

7. Verfahren nach einem der vorhergehenden Ansprüche, wobei das ausgewählte Dienstprofil und/oder das weitere ausgewählte Dienstprofil für den Benutzer in dem Heimatstandort-Register dadurch aktiviert werden, daß ein Benutzer-Datensatz in dem Heimatstandort-Register verändert wird.

8. Verfahren nach einem der vorhergehenden Ansprüche, **dadurch gekennzeichnet**, daß zum Übertragen der Information, welches und/oder welches weitere der mehreren Dienstprofile ausgewählt wurden, von dem mobilen Endgerät an das Heimatstandort-Register eine aus einem Mobilfunkstandard bekannte Servicedaten-Funktion genutzt wird, wobei die Information als ein String übertragen wird, vorzugsweise als ein USSD-String.
